# EUROPEAN PATENT APPLICATION

(11) **EP 2 712 129 A1**
(43) Date of publication of application: **26.03.2014**
(21) Application number: 11865623.0
(22) Date of filing: 19.08.2011
(51) Int. Cl.: H04L 12/56

(54) **METHOD FOR MODIFYING MULTIPLE INPUT MULTIPLE OUTPUT MODE BETWEEN RADIO NETWORK CONTROLLERS**

(30) Priority: 16.05.2011 CN 201110126241
(71) Applicant: ZTE Corporation, Shenzhen, Guangdong 518057 (CN)
(72) Inventor: HUANG, He, Shenzhen Guangdong 518057 (CN)
(74) Representative: Petraz, Gilberto Luigi
(86) International application number: PCT/CN2011/078662
(87) International publication number: WO 2012/155404

(57) **Abstract**

A method for modifying Multiple Input Multiple Output (MIMO) mode across Radio Network Controllers (RNCs) is provided by the present invention. In the method of the present invention, a Serving RNC (SRNC) transmits a request message to a Drift RNC (DRNC), wherein the request message requests the DRNC to set a radio link for a mobile equipment in a cell controlled by the DRNC, and the DRNC feeds back a response message to the SRNC based on the capability of the DRNC and the cell controlled by the DRNC, wherein the response message contains the element used for configuring the radio link in the non-MIMO mode. As a result, when the DRNC and the cell controlled by the DRNC support the MIMO mode, the SRNC configures the radio link to be in the MIMO mode for the mobile equipment, and when the DRNC and the cell controlled by the DRNC do not support the MIMO mode, the SRNC configures the radio link to be in the non-MIMO mode for the mobile equipment. Therefore, a mobile equipment handover or a radio link reconfiguration is completed, and the success rate of the handover or the configuration is improved.

## Description

### Technical Field

The present invention relates to Multiple Input Multiple Output (MIMO) modification technology, and particularly, to a method for modifying MIMO mode across Radio Network Controllers (RNCs) and a Serving/Drifted RNC.

### Background

When, in a cell which supports Multiple Input Multiple Output (MIMO) technology, there is no user equipment (UE) which activates MIMO or there are few UE that activate MIMO, usually, the auxiliary antenna will be turned off or the auxiliary pilot channel will be deactivated so as to realize energy saving and reduce interference. The operation of turning off/turning on the auxiliary antenna or deactivating/activating the auxiliary pilot can be triggered by a Radio Network Controller (RNC) or triggered by a Node B. RNC triggering refers to: when the RNC finds that there are few UE that activate MIMO in a cell controlled thereby, the RNC reconfigures the UE as that the Node B employs a non-MIMO mode to perform transmitting; and meanwhile, the RNC reconfigures the cell as a single antenna cell through a NodeB Application Part (NBAP). Node B triggering refers to: when the cell employs dual antenna to perform transmission, if there is no UE that activates MIMO or there are few UE that activate MIMO in the cell, the Node B notifies the RNC to configure these UE to be in a non-MIMO mode, and when all the UE have changed to non-MIMO mode, the RNC notifies the Node B to convert the cell to perform transmitting with a single antenna. When the auxiliary antenna is turned off or the auxiliary pilot channel is deactivated in the cell controlled by the Control RNC (CRNC), the cell will no longer support the MIMO function. However, based on the current 3GPP protocol, the local RNC cannot notify the Serving RNC (SRNC) of the change in the capability. At this moment, the following situations may occur:
1) if a certain UE hands over from a cell controlled by the SRNC to a cell controlled by the CRNC (i.e., taking the CRNC as a DRNC (Drifted RNC)), since the SRNC does not know that the cell controlled by the CRNC does not support the MIMO capability, this UE may be configured to be in an MIMO mode in a radio link setup or addition command of the Iur interface. Based on the existing Iur interface signaling, since the DRNC cannot change that the UE is configured to be in the MIMO mode by the SRNC, it can only reply to the SRNC with a radio link setup/addition failure, thus causing handover failure.
2) If this UE successfully hands over to the cell controlled by the DRNC with a non-MIMO mode but the SRNC activates the MIMO mode of the UE through radio link reconfiguration, since the DRNC cannot change that the UE is configured to be in the MIMO mode by the SRNC,, it can only reply to the SRNC with radio link reconfiguration failure, thus causing reconfiguration failure.

### Summary

The main technical problem to be solved by the present invention is to provide a method for modifying Multiple Input Multiple Output (MIMO) mode across Radio Network Controllers (RNCs) and a Serving RNC (SRNC)/Drift RNC (DRNC), which can avoid the defect of handover failure or reconfiguration failure of a mobile equipment caused by the original protocol flow and improve the handover and reconfiguration success rate of the mobile equipment.

In order to solve the abovementioned technical problem, the technical solution adopted by the present invention is as follows:
a method for modifying Multiple Input Multiple Output (MIMO) mode between Radio Network Controllers (RNCs), comprises:
a Serving RNC (SRNC) transmits a request message to a Drift RNC (DRNC), wherein the request message requests the DRNC to set a radio link for a current mobile equipment in a cell controlled by the DRNC, and the request message contains an element which requests the DRNC to configure the radio link to be in the MIMO mode; and
the SRNC receives a response message fed back by the DRNC regarding the request message, and judges whether the response message contains an element which requests the SRNC to configure the radio link to be in a non-MIMO mode, if yes, then notifies the mobile equipment to configure the radio link to be in the non-MIMO mode, and if no, then notifies the mobile equipment to configure the radio link to be in the MIMO mode.

Preferably, the element which requests to configure the radio link to be in the MIMO mode comprises an MIMO activation indicator element and/or a single stream MIMO activation indicator element.

Preferably, the radio link setup request message comprises a HS-DSCH preconfiguration setup information element and a HS-DSCH Information element, and the HS-DSCH Preconfiguration Setup Information element carries the MIMO activation indicator element, and the HS-DSCH Information element carries the MIMO activation indicator element or the single stream MIMO activation indicator element.

Preferably, the radio link addition request message comprises a HS-DSCH Preconfiguration Setup Information element, a HS-DSCH Serving Cell Change Information element and a HS-DSCH FDD Secondary Serving Information element, wherein the HS-DSCH Serving Cell Change Information element comprises a HS-DSCH Information element; and the HS-DSCH Preconfiguration Setup Information element carries the MIMO activation indicator element, and both the HS-DSCH Information element and the HS-DSCH FDD Secondary Serving Information element carry the MIMO activation indicator element or the single stream MIMO activation indicator element.

Preferably, the radio link reconfiguration request message comprises a HS-DSCH Preconfiguration Setup Information element, a HS-DSCH Information element, a HS-DSCH Information To Modify element, a HS-DSCH FDD Serving Information element and a HS-DSCH FDD Serving Information To Modify Unsynchronised element, and the HS-DSCH Preconfiguration Setup Information element carries the MIMO activation indicator element, all of the HS-DSCH Information element, the HS-DSCH Information To Modify element, the HS-DSCH FDD Serving Information element and the HS-DSCH FDD Serving Information To Modify Unsynchronised element carry the MIMO activation indicator element or the single stream MIMO activation indicator element.

Preferably, the radio link reconfiguration prepare message comprises a HS-DSCH Preconfiguration Setup Information element, a HS-DSCH Information element, a HS-DSCH Information To Modify Unsynchronised element, a HS-DSCH FDD Secondary Serving Information element and a HS-DSCH FDD Serving Information To Modify Unsynchronised element, and the HS-DSCH Preconfiguration Setup Information element carries the MIMO activation indicator element, all of the HS-DSCH Information element, the HS-DSCH Information To Modified Unsynchronised element, the HS-DSCH FDD Secondary Serving Information element and the HS-DSCH FDD Serving Information To Modify Unsynchronised element carry the MIMO activation indicator element or the single stream MIMO activation indicator element.

A Serving Radio Network Controller (SRNC), comprises: a radio resource control protocol processing module, a radio link Multiple Input Multiple Output (MIMO) mode control module, and a Radio Network Subsystem Application Part signaling processing module, wherein;
the radio link Multiple Input Multiple Output (MIMO) mode control module is connected with the radio resource control protocol processing module and the Radio Network Subsystem Application Part signaling processing module and configured to transmit to a Drifted RNC (DRNC) a request message for setting a radio link for a current mobile equipment, wherein the request message comprises an element which requests the DRNC to configure the radio link to be in the MIMO mode, and configured to receive a response message fed back by the DRNC regarding the request message, wherein the response message comprises an element which requests to configure the radio link to be in a non-MIMO mode;
the Radio Network Subsystem Application Part signaling processing module is connected to the radio resource control protocol processing module and configured to control a connection between the DRNC and the SRNC and judge whether the response message fed back by the DRNC comprises the element which requests the SRNC to configure the radio link to be in the non-MIMO mode; and
the radio resource control protocol processing module is configured to process a protocol between the SRNC and the mobile equipment, and configured to, when the Radio Network Subsystem Application Part signaling processing module judges that the response message comprises the element which requests the SRNC to configure the radio link to be in the non-MIMO mode, notify the current mobile equipment to configure the radio link to be in the non-MIMO mode, and configured to, when the Radio Network Subsystem Application Part signaling processing module judges that the response message does not comprise the element which requests the SRNC to configure the radio link to be in the non-MIMO mode, notify the current mobile equipment to configure the radio link to be in the MIMO mode.
a method for modifying Multiple Input Multiple Output (MIMO) mode across Radio Network Controllers (RNC), comprises:
a Drift RNC (DRNC) receives a request message transmitted from a Serving RNC (SRNC), wherein the request message requests the DRNC to set a radio link for a current mobile equipment in a cell controlled by the DRNC, and the request message contains an element which requests the DRNC to configure the radio link to be in the MIMO mode; and
the DRNC judges whether itself and the cell controlled thereby can establish a radio link in the MIMO mode, and if the DRNC and the cell controlled thereby cannot establish the radio link in the MIMO mode, then it makes a response regarding the request message and feeds back to the SRNC a response message where in the response message contains an element which requests the SRNC to configure the radio link to be in the non-MIMO mode, otherwise, it makes a response regarding the request message and feeds back to the SRNC a response message which does not contain an element which requests the SRNC to configure the radio link to be in the non-MIMO mode.

Preferably, the element which requests the SRNC to configure the radio link to be in the non-MIMO mode comprises an MIMO deactivation indicator element.

A Drifted Radio Network Controller (DRNC), comprising: a radio link Multiple Input Multiple Output (MIMO) mode control module and a Radio Network Subsystem Application Part signaling processing module, wherein
the Radio Network Subsystem Application Part signaling processing module is configured to control a connection between a Serving RNC (SRNC) and the DRNC and process a request message transmitted from the SRNC ,wherein the request message requests to set a radio link for a current mobile equipment in a cell controlled by the DRNC, and contains an element which requests the DRNC to configure the radio link to be in the MIMO mode; and configured to judge whether the DRNC and the cell controlled thereby support the MIMO mode; and
the radio link Multiple Input Multiple Output (MIMO) mode control module is connected to the Radio Network Subsystem Application Part signaling processing module and is configured to, when the Radio Network Subsystem Application Part signaling processing module judges that the MIMO mode is not supported, feeding back to the SRNC a response message containing requesting to configure the radio link to be in the non-MIMO mode; and configured to, when the Radio Network Subsystem Application Part signaling processing module judges that the MIMO mode is supported, feed back to the SRNC a response message that the current mobile equipment can be configured to be in the MIMO mode.

The beneficial effects of the present invention are as follows:
in the present invention, the SRNC sends to the DRNC a message which carries the element which requests to configure the mobile equipment to be in the MIMO mode and judges whether the response message fed back by the DRNC carries an element which requests the SRNC to configure the mobile equipment to be in the non-MIMO mode, if yes, then the SRNC configures the mobile equipment to be in the non-MIMO mode, otherwise, configures the mobile equipment to be in the MIMO mode. That is, the SRNC judges whether the response message fed back by the DRNC contains an element which requests to configure the radio link to be in the non-MIMO mode for the mobile equipment, that is, when the DRNC does not support the MIMO mode, the SRNC configures the radio link of the mobile equipment to be in the non-MIMO mode according to the response message, and when the DRNC supports the MIMO mode, the SRNC configures the radio link of the mobile equipment to be in the MIMO mode according to the response message, so that the method in the present invention completes the modification of the MIMO mode across RNCs, thus avoiding the handover failure or reconfiguration failure of the mobile equipment caused by the original protocol flow and improving the handover success rate of the mobile equipment of the reconfiguration success rate of the radio link.

In the present invention, the DRNC judges whether itself or the cell controlled thereby supports the MIMO mode, and makes the corresponding response regarding the request message sent from the SRNC, and feeds back to the SRNC the response message, wherein the response message contains an element which requests to configure the mobile equipment to be in the non-MIMO mode if the DRNC judges that itself or the cell controlled thereby supports the MIMO mode, and then the SRNC configures the mobile equipment as an element in the non-MIMO mode according to the response message, and if no, it feeds back to the SRNC the response message which does not contain the element which requests to configure the mobile equipment to be in the non-MIMO mode, and then the SRNC configures the mobile equipment to be in the MIMO mode. That is, by way of judging the capability of the DRNC itself and the cell controlled thereby and then feeding back to the SRNC a response message containing the element which requests to configure the mobile equipment to be in the non-MIMO mode, the method in the present invention changes the MIMO mode of the mobile equipment, thus avoiding handover failure or reconfiguration failure of the mobile equipment caused by the original protocol flow and improving the handover or reconfiguration success rate of the mobile equipment.

### Brief Description of the Drawings

Fig. 1 is a schematic diagram of an embodiment of the cooperation of an SRNC and a DRNC of the present invention;
Fig. 2 is a flowchart of an embodiment of a method for modifying MIMO mode across RNCs of the present invention;
Fig. 3 is a flowchart of a particular embodiment of a method for modifying MIMO mode across RNCs of the present invention;
Fig. 4 is a flowchart of another embodiment of a method for modifying MIMO mode across RNCs of the present invention; and
Fig. 5 is a flowchart of another particular embodiment of a method for modifying MIMO mode across RNCs of the present invention.

### Detailed Description of the Embodiments

Hereinafter, a detailed description is given to the preferred embodiments of the invention with reference to the accompanying drawings.

### Embodiment 1

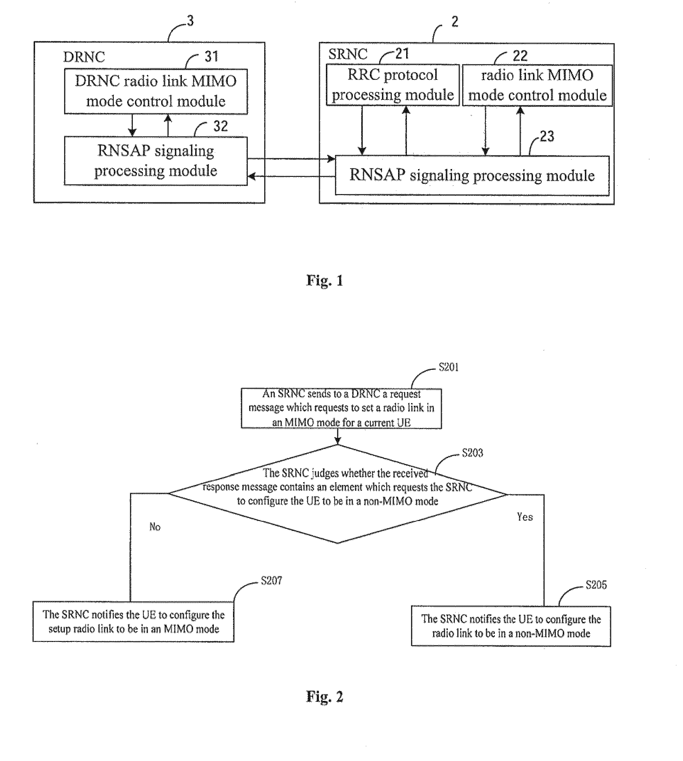

Please refer to Fig. 1, it is a structural schematic diagram of an embodiment of the connection relationship between an SRNC and a DRNC of this implementation. The SRNC2 of this implementation includes a radio resource control (RRC) protocol processing module 21, a radio link MIMO mode control module 22, and a radio network subsystem application part (RNSAP) signaling processing module 23. The radio link MIMO mode control module 22 is connected to the RRC protocol processing module 21 and the RNSAP processing module 23 and configured to send to the DRNC a request message which requests to set a radio link for the current UE, wherein the request message contains an element which requests the DRNC3 to configure the radio link to be in an MIMO mode, and receive a response message fed back by the DRNC3 regarding the request message, wherein the response message contains an element which requests to configure the radio link of the current UE to be in a non-MIMO mode; the RNSAP signaling processing module 23 is connected to the RRC protocol processing module 21 and is configured to control a connection between the DRNC3 and the SRNC2 and judge whether the response message received by the radio link MIMO mode control module 22 contains the element which requests the SRNC2 to configure the radio link of the current UE to be in the MIMO mode; and the RRC protocol processing module 21 is configured to process the protocol between the SRNC2 and the UE, and when the RNSAP signaling processing module 23 judges that the response message contains the element which requests the SRNC to configure the radio link to be in the non-MIMO mode, the RRC protocol processing module 21 is configured to notify the current UE to configure the radio link to be in the non-MIMO mode; and when the RNSAP signaling processing module 23 judges that the response message does not contain the element which requests the SRNC2 to configure the radio link to be in the non-MIMO mode, the RRC protocol processing module 21 is configured to notify the current UE to configure the radio link to be in the MIMO mode.

### Embodiment 2

Please refer to Fig. 1, a DRNC3 of this implementation includes a radio link MIMO mode control module 31 and an RNSAP signaling processing module 32 connected to each other, wherein the RNSAP signaling processing module 32 controls a connection between the SRNC and the DRNC and processes a request message sent by the SRNC2 which requests to set a radio link in an MIMO mode for the current UE in a cell controlled by the DRNC3 and judges whether the DRNC3 itself and the cell controlled thereby support the MIMO mode; when the RNSAP signaling processing module 32 judges that the DRNC3 itself and the cell controlled thereby do not support the MIMO mode, the radio link MIMO mode control module 31 is configured to feed back to the SRNC2 a response message which contains requesting to configure the radio link of the current UE to be in a non-MIMO mode; and when the RNSAP signaling processing module 32 judges that the DRNC3 itself and the cell controlled thereby support the MIMO mode, then the radio link MIMO mode control module 31 is configured to feed back to the SRNC2 a response message that the radio link of the current UE can be configured to be in the MIMO mode.

Based on the abovementioned SRNC2, this implementation provides a method for modifying MIMO mode across RNCs.

In order to realize the method of this implementation, it is required to add the following elements on the basis of the existing protocol: adding an MIMO deactivation indicator element in the MIMO information response element of the Iur interface element. This MIMO deactivation indicator element refers to requesting the SRNC to configure the radio link established for the UE to be in the non-MIMO mode when the DRNC cannot establish the radio link in the MIMO mode for the UE. Accordingly, the contents in the 3GPP protocol TS 25.423 to modify are as follows:

**9.2.2.78 MIMO Information Response**

| **IE/Group Name** | **Presence** | | **Range** | | **IE Type and Reference** | | **Semantics Description** |
|---|---|---|---|---|---|---|---|
| MIMO Deactivation Indicator | | O | | | | NULL | |
| CHOICE Pilot Configuration | | | | M | | | |
| >*Primary and Secondary CPICH* | | | | | | | |
| >>MIMO S-CPICH Channelisation Code | | M | | | | INTEGER (0..255) | |
| >*Normal and Diversity Primary CPICH* | | | | NULL | | | |
| MIMO N/M Ratio | | M | | | | ENUMERATED (1/2, 2/3, 3/4, 4/5, 5/6, 6/7, 7/8, 8/9, 9/10, 1/1,...) | |

### Embodiment 3

Please refer to Fig. 2, it is a flowchart of an embodiment of a method for modifying MIMO mode across RNCs of this implementation. The method for modifying MIMO mode across RNCs of this implementation includes the following steps:
S201, an SRNC sends to a DRNC a request message which requests the DRNC to set a radio link for a current UE in a cell controlled thereby, and the request message contains an element of configuring the radio link to be in an MIMO mode.

The request message in this implementation includes a radio link setup message or a radio link addition request message or a radio link reconfiguration message or a radio link reconfiguration prepare message. The element of configuring the radio link to be in the MIMO mode in this implementation includes an MIMO mode activation indicator element and a single stream MIMO mode activation indicator element.

The cell corresponding to the DRNC in this implementation includes a primary cell and a secondary cell. The radio link setup request message in this implementation contains a HS-DSCH Preconfiguration Setup information signaling, and a portion in this signaling which corresponds to the primary cell carries an MIMO Activation Indicator element, and a portion in the HS-DSCH Preconfiguration Setup information signaling which corresponds to the secondary cell also carries an MIMO Activation Indicator element; a HS-DSCH Information element, and this element carries an MIMO Activation Indicator or a single stream MIMO Activation Indicator element.

The Radio Link Addition Request message in this implementation includes an HS-DSCH Preconfiguration Setup signaling, a portion in this signaling which corresponds to the primary cell carries an MIMO Activation Indicator element, and a portion thereof which corresponds to the secondary cell also carries an MIMO Activation Indicator element; an HS-DSCH Serving Cell Change Information element, and the HS-DSCH Information element in this element carries an MIMO Activation Indicator or Single Stream MIMO Activation Indicator element; and an HS-DSCH FDD Secondary Serving Information element, which carries an MIMO Activation Indicator or Single Stream MIMO Activation Indicator element.

The Radio Link Reconfiguration Prepare message in this implementation contains an HS-DSCH Preconfiguration Setup signaling, and a portion of this signaling which corresponds to the primary cell carries an MIMO Activation Indicator element and a portion of this signaling which corresponds to the secondary cell carries an MIMO Activation Indicator element; an HS-DSCH Information element, and this element carries an MIMO Activation Indicator or Single Stream MIMO Activation Indicator element; an HS-DSCH Information To Modify element, and an MIMO Mode Indicator in this element is set as activate or this element carries a Single Stream MIMO Mode Indicator element; an HS-DSCH FDD Secondary Serving Information element, and it carries an MIMO Activation Indicator or Single Stream MIMO Activation Indicator element; and an HS-DSCH FDD Secondary Serving Information To Modify element, and it carries an MIMO Activation Indicator or Single Stream MIMO Activation Indicator element;

The Radio Link Reconfiguration Request message in this implementation contains: an HS-DSCH Preconfiguration Setup signaling, and a portion of this signaling which corresponds to the primary cell carries an MIMO Activation Indicator element and a portion of this signaling which corresponds to the secondary cell also carries an MIMO Activation Indicator element; an HS-DSCH Information element, and this element carries an MIMO Activation Indicator or Single Stream MIMO Activation Indicator element; an HS-DSCH Information To Modify Unsynchronised element, and an MIMO Mode Indicator in this element is set as activate or this element carries a Single Stream MIMO Mode Indicator element; an HS-DSCH FDD Secondary Serving Information element, and it carries an MIMO Activation Indicator or Single Stream MIMO Activation Indicator element; and an HS-DSCH FDD Secondary Serving Information To Modify Unsynchronised element, and it carries an MIMO Activation Indicator or Single Stream MIMO Activation Indicator element.

S203, the SRNC receives a response message fed back by the DRNC regarding the request message, and judges whether the response message contains an element which requests the SRNC to configure the radio link to be in the non-MIMO mode, and if yes, then perform step S205, otherwise, perform step S207.

The element which requests the SRNC to configure the radio link to be in the non-MIMO mode in this implementation includes an MIMO Deactivation Indicator element.

S205, the SRNC configures the radio link to be in the non-MIMO mode.

S207, the SRNC configures the radio link to be in the MIMO mode.

In the method for modifying MIMO mode across RNCs in this implementation, the SRNC sends a request message to the DRNC which requests to configure the radio link to be in the MIMO mode for the UE and judges whether the response message fed back by the DRNC contains the element which requests the SRNC to configure the radio link of the UE to be in the non-MIMO mode, if yes, then the SRNC notifies the UE to configure the radio link to be in the non-MIMO mode, otherwise, it configures the radio link of the UE to be in the MIMO mode. That is, the SRNC judges whether the response message fed back by the DRNC contains the element which requests to configure the radio link to be in the non-MIMO mode and change the MIMO mode of the UE according to this response message, so that the method in this implementation completes the handover of the UE or the reconfiguration of the radio link, avoiding the UE handover failure or radio link reconfiguration failure caused by the original protocol flow, and thus improving the handover success rate of the UE or the reconfiguration success rate of the radio link.

Hereinafter, the method of this implementation will be described in detail in conjunction with particular embodiments.

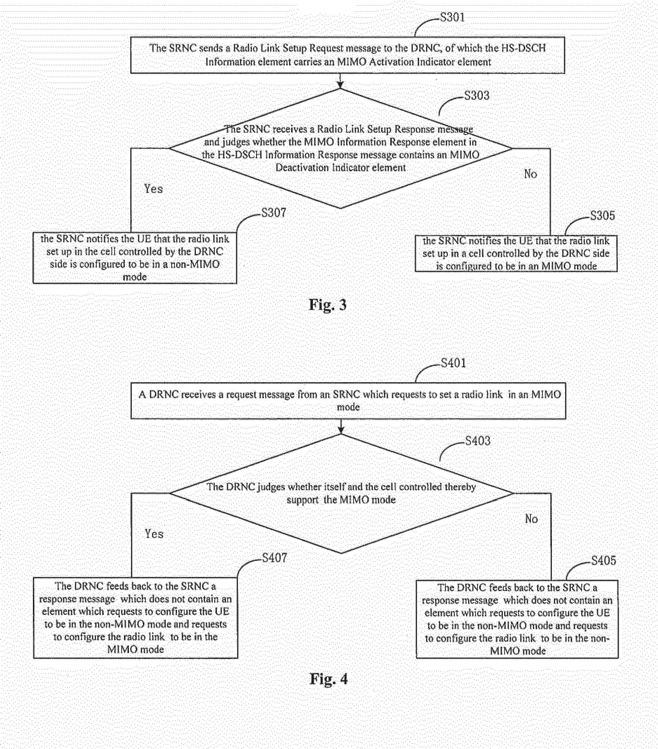

Please refer to Fig. 3, it is a flowchart of a particular embodiment of a method for modifying MIMO mode across RNCs of this implementation:
S301, an SRNC2 needs to set up a radio link configured to be in an MIMO mode for a UE, which moves an DRNC3 side, through the DRNC3, and sends a Radio Link Setup Request message to the DRNC3, and the HS-DSCH Information element in this message carries an MIMO Activation Indicator element.
S302, the SRNC2 receives a Radio Link Setup Response message sent by the DRNC3 regarding the Radio Link Setup Request message sent by the SRNC2 which requests to set up a radio link for the UE.
S303, the SRNC2 judges whether the MIMO Information Response element in the HS-DSCH Information Response element contains an MIMO Deactivation Indicator element, if no, then perform S305, otherwise, perform 307.
S305, the SRNC2 notifies the UE that the radio link set up in a cell controlled by the DRNC3 side is configured to be in an MIMO mode.
S307, the SRNC2 notifies the UE that the radio link set up in the cell controlled by the DRNC3 side is configured to be in a non-MIMO mode.

### Embodiment 4

Please refer to Fig. 4, it is a flowchart of another embodiment of a method for modifying MIMO mode across RNCs of this implementation. The method for modifying MIMO mode across RNCs of this implementation includes:
S401, a DRNC receives a request message from an SRNC which requests the DRNC to set a radio link for a current UE in a cell controlled thereby, and the request message contains an element of configuring the radio link to be in an MIMO mode.
S403, the DRNC judges whether itself and the cell controlled thereby can set up a radio link in an MIMO mode, and if the DRNC and the cell controlled thereby cannot set up the radio link in the MIMO mode, then perform step S405, otherwise, perform step S407.
S405, the DRNC makes a response regarding this request message and feeds back to the SRNC a response message which contains an element which requests to configure the radio link to be in the non-MIMO mode and requests the SRNC to configure the radio link of the UE to be in a non-MIMO mode.
S407, the DRNC makes a response regarding this request message and feeds back to the SRNC a response message which does not contain an element which requests the SRNC to configure the radio link to be in the non-MIMO mode, wherein the response message requests the SRNC to configure the radio link of the UE to be in the MIMO mode.

In the method for modifying MIMO mode across RNCs of this implementation, the DRNC judges whether itself or the cell controlled thereby support the MIMO mode and makes a corresponding response regarding the request message sent from the SRNC, if the DRNC judges that itself or the cell controlled thereby do not support the MIMO mode, then it feeds back to the SRNC a response message which contains the element of configuring the radio link of the UE to be in the non-MIMO mode, and then the SRNC configures the radio link of the UE as an element in a non-MIMO mode according to this response message, if yes, then it feeds back to the SRNC the response message which does not contain configuring the radio link of the UE as an element in the non-MIMO mode, and then the SRNC configures the radio link of the UE to be in the MIMO mode. That is, by way of judging the capability of the DRNC itself and the cell controlled thereby and feeding back to the SRNC the response message which contains configuring the UE as an element in the non-MIMO mode and requesting to change the MIMO mode of the UE, the method in this implementation completes the handover of the UE or the reconfiguration of the radio link, avoiding the UE handover failure or radio link reconfiguration failure caused by the original protocol flow, and thus improving the handover success rate of the UE or the reconfiguration success rate of the radio link.

Hereinafter, the method of this implementation will be described in detail in conjunction with particular embodiments.

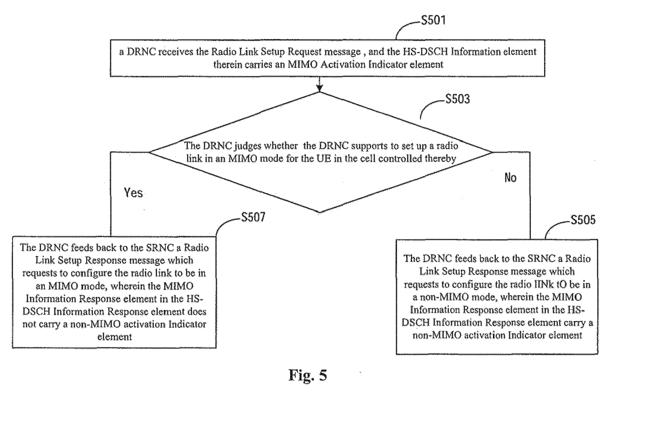

Please refer to Fig. 5, it is a flowchart of a particular embodiment of a method for modifying MIMO mode across RNCs of this implementation:
S501: a DRNC3 receives the Radio Link Setup Request message sent from a SRNC2 which requires to set up a radio link in a cell controlled by the DRNC3, and the HS-DSCH Information element therein carries an MIMO Activation Indicator element.
S503: the DRNC3 judges whether the capability thereof and the capability of the cell controlled thereby support MIMO, if both of them support MIMO, then perform S505, otherwise, perform S507.
S505: the DRNC3 sends a Radio Link Setup Response message to the SRNC2, of which the MIMO Information Response element in the HS-DSCH Information Response element does not carry an MIMO Deactivation Indicator element.
S507: the DRNC3 sends a Radio Link Setup Response message to the SRNC2, of which the MIMO Information Response element in the HS-DSCH Information Response element carries an MIMO Deactivation Indicator element.

The foregoing is a further detailed description made to the present invention in conjunction with particular implementations, which shall not be deemed that the particular implementation of the present invention is merely limited to these description. For a person skilled in the art of the present invention, several simple deductions or alternations can be made without departing from the concept of the present invention, which shall be regarded as the protection scope of the present invention.

## Claims

1. A method for modifying Multiple Input Multiple Output (MIMO) mode across Radio Network Controllers (RNCs), **characterized by** comprising:
a Serving RNC (SRNC) transmitting a request message to a Drift RNC (DRNC), wherein the request message requests the DRNC to set a radio link for a current mobile equipment in a cell controlled by the DRNC, and the request message contains an element which requests the DRNC to configure the radio link to be in the MIMO mode; and
the SRNC receiving a response message fed back by the DRNC regarding the request message, and judging whether the response message contains an element which requests the SRNC to configure the radio link to be in a non-MIMO mode, if the response message contains the element which requests the SRNC to configure the radio link to be in the non-MIMO mode, then notifying the mobile equipment to configure the radio link to be in the non-MIMO mode, and otherwise, then notifying the mobile equipment to configure the radio link to be in the MIMO mode.

2. The method according to claim 1, **characterized in that** the request message which requests the DRNC to set the radio link for the mobile equipment in the cell controlled by the DRNC comprises a radio link setup request message or a radio link addition request message or a radio link reconfiguration request message or a radio link reconfiguration prepare message.

3. The method according to claim 2, **characterized in that** the element which requests to configure the radio link to be in the MIMO mode comprises an MIMO activation indicator element and/or a single stream MIMO activation indicator element.

4. The method according to claim 3, **characterized in that** the radio link setup request message comprises a HS-DSCH Preconfiguration Setup Information element and a HS-DSCH Information element, and the HS-DSCH Preconfiguration Setup Information element carries the MIMO activation indicator element, and the HS-DSCH Information element carries the MIMO activation indicator element or the single stream MIMO activation indicator element.

5. The method according to claim 3, **characterized in that** the radio link addition request message comprises a HS-DSCH Preconfiguration Setup Information element, a HS-DSCH Serving Cell Change Information element and a HS-DSCH FDD Secondary Serving Information element, wherein the HS-DSCH Serving Cell Change Information element comprises a HS-DSCH Information element; and the HS-DSCH Preconfiguration Setup Information element carries the MIMO activation indicator element, and both the HS-DSCH Information element and the HS-DSCH FDD Secondary Serving Information element carry the MIMO activation indicator element or the single stream MIMO activation indicator element.

6. The method according to claim 3, **characterized in that** the radio link reconfiguration request message comprises a HS-DSCH Preconfiguration Setup Information element, a HS-DSCH Information element, a HS-DSCH Information To Modify element, a HS-DSCH FDD Serving Information element and a HS-DSCH FDD Serving Information To Modify Unsynchronised element, and the HS-DSCH Preconfiguration Setup Information element carries the MIMO activation indicator element, all of the HS-DSCH Information element, the HS-DSCH Information To Modify element, the HS-DSCH FDD Serving Information element and the HS-DSCH FDD Serving Information To Modify Unsynchronised element carry the MIMO activation indicator element or the single stream MIMO activation indicator element.

7. The method according to claim 3, **characterized in that** the radio link reconfiguration prepare message comprises a HS-DSCH Preconfiguration Setup Information element, a HS-DSCH Information element, a HS-DSCH Information To Modify Unsynchronised element, a HS-DSCH FDD Secondary Serving Information element and a HS-DSCH FDD Serving Information To Modify Unsynchronised element, and the HS-DSCH Preconfiguration Setup Information element carries the MIMO activation indicator element, all of the HS-DSCH Information element, the HS-DSCH Information To Modified Unsynchronised element, the HS-DSCH FDD Secondary Serving Information element and the HS-DSCH FDD Serving Information To Modify Unsynchronised element carry the MIMO activation indicator element or the single stream MIMO activation indicator element.

8. A Serving Radio Network Controller (SRNC), **characterized by** comprising: a radio resource control protocol processing module, a radio link Multiple Input Multiple Output (MIMO) mode control module, and a Radio Network Subsystem Application Part signaling processing module, wherein;
the radio link Multiple Input Multiple Output (MIMO) mode control module is connected with the radio resource control protocol processing module and the Radio Network Subsystem Application Part signaling processing module and configured to transmit to a Drifted RNC (DRNC) a request message for setting a radio link for a current mobile equipment, wherein the request message comprises an element which requests the DRNC to configure the radio link to be in the MIMO mode, and configured to receive a response message fed back by the DRNC regarding the request message, wherein the response message comprises an element which requests to configure the radio link to be in a non-MIMO mode;
the Radio Network Subsystem Application Part signaling processing module is connected to the radio resource control protocol processing module and configured to control a connection between the DRNC and the SRNC and judge whether the response message fed back by the DRNC comprises the element which requests the SRNC to configure the radio link to be in the non-MIMO mode; and
the radio resource control protocol processing module is configured to process a protocol between the SRNC and the mobile equipment, and configured to, when the Radio Network Subsystem Application Part signaling processing module judges that the response message comprises the element which requests the SRNC to configure the radio link to be in the non-MIMO mode, notify the current mobile equipment to configure the radio link to be in the non-MIMO mode, and configured to, when the Radio Network Subsystem Application Part signaling processing module judges that the response message does not comprise the element which requests the SRNC to configure the radio link to be in the non-MIMO mode, notify the current mobile equipment to configure the radio link to be in the MIMO mode.

9. A method for modifying Multiple Input Multiple Output (MIMO) mode across Radio Network Controllers (RNCs), **characterized by** comprising:
a Drift RNC (DRNC) receiving a request message transmitted from a Serving RNC (SRNC), wherein the request message requests the DRNC to set a radio link for a current mobile equipment in a cell controlled by the DRNC, and the request message contains an element which requests the DRNC to configure the radio link to be in the MIMO mode; and
the DRNC judging whether the DRNC and the cell controlled by the DRNC can establish a radio link in the MIMO mode, and if the DRNC and the cell controlled by the DRNC cannot establish the radio link in the MIMO mode, then responding the request message and feeding back to the SRNC a response message, wherein the response message contains an element which requests the SRNC to configure the radio link to be in the non-MIMO mode, otherwise, responding the request message and feeding back to the SRNC a response message, wherein the response message does not contain an element which requests the SRNC to configure the radio link to be in the non-MIMO mode.

10. The method according to claim 9, **characterized in that** the element which requests the SRNC to configure the radio link to be in the non-MIMO mode comprises an MIMO deactivation indicator element.

11. A Drifted Radio Network Controller (DRNC), **characterized by** comprising: a radio link Multiple Input Multiple Output (MIMO) mode control module and a Radio Network Subsystem Application Part signaling processing module, wherein,
the Radio Network Subsystem Application Part signaling processing module is configured to control a connection between a Serving RNC (SRNC) and the DRNC and process a request message transmitted from the SRNC, wherein the request message requests to set a radio link for a current mobile equipment in a cell controlled by the DRNC, and contains an element which requests the DRNC to configure the radio link to be in the MIMO mode; and configured to judge whether the DRNC and the cell controlled by the DRNC support the MIMO mode; and
the radio link Multiple Input Multiple Output (MIMO) mode control module is connected to the Radio Network Subsystem Application Part signaling processing module and is configured to, when the Radio Network Subsystem Application Part signaling processing module judges that the MIMO mode is not supported, feed back to the SRNC a response message containing requesting to configure the radio link to be in the non-MIMO mode; and configured to, when the radio network subsystem application protocol signaling processing module judges that the MIMO mode is supported, feed back to the SRNC a response message that the current mobile equipment can be configured to be in the MIMO mode.
